# EUROPEAN PATENT SPECIFICATION

(11) **EP 3 382 206 B1**
(45) Date of publication and mention of the grant of the patent: **16.12.2020**
(21) Application number: 17164397.6
(22) Date of filing: 31.03.2017
(51) Int. Cl.: F04D 13/06, F04D 29/62, F04D 1/00

(54) **PUMP ASSEMBLY**
PUMPENANORDNUNG
ENSEMBLE DE POMPE

(43) Date of publication of application: 03.10.2018
(73) Proprietor: Grundfos Holding A/S, 8850 Bjerringbro (DK)
(72) Inventor: VESTERGAARD KRAGELUND, Klaus, 8240 Risskov (DK); PLOUGMANN, Jan, 8850 Bjerringbro (DK); AARESTRUP, Jan Carøe, 8850 Bjerringbro (DK)
(74) Representative: Patentanwälte Vollmann Hemmer Lindfeld Partnerschaft mbB

(56) References cited:
- WO-A1-2013/098092
- CH-A- 374 550
- DE-A1- 19 914 579
- DE-A1- 19 943 862
- JP-A- 2014 228 064
- US-A1- 2010 090 635

## Description

### TECHNICAL FIELD

The present disclosure relates generally to pump assemblies, in particular to speed controlled wet rotor pumps. Such pumps in the power range of 5W to 3kW are typically used as circulation pumps of house heating systems.

### BACKGROUND

Wet rotor pumps usually comprise a rotor can separating a permanent magnet rotor from a stator. The rotor drives an impeller located in a pump housing. Typically, a motor housing is fastened to the pump housing, wherein the rotor can and the stator are attached to the pump housing by the fastener of the motor housing.

EP 2 072 828 A1 describes a wet rotor centrifugal pump as a circulation pump for house heating systems. The pump disclosed therein has a compact design by locating motor electronics at least partially radially around the stator. The motor housing of that pump is attached to the pump housing via a rotor can flange so that the motor housing can be removed without releasing any wet parts. US 2010/090635 A1, DE 199 43 862 A1 and WO 2013/098092 A1 disclose other pumps of this kind.

### SUMMARY

In contrast to such known pumps, embodiments of the present invention provide a pump assembly with a more compact design.

In accordance with the invention, a pump assembly is provided comprising
- an impeller with a rotor axis,
- a pump housing accommodating the impeller,
- a drive motor with a stator and a wet rotor for driving the impeller,
- a rotor can accommodating the wet rotor, and
- a stator housing accommodating the stator,
wherein the rotor can is mounted by a first coupling to the pump housing, wherein the stator housing is mounted by a second coupling to the pump housing,
wherein the first coupling is located closer to the rotor axis than the second coupling.

The radially more inward first coupling of the rotor allows for a more compact pump design. The second coupling of the stator housing may couple the stator housing directly to the pump housing without the rotor can or the first coupling in between. The rotor can mounting may be completely independent from the stator housing mounting. The rotor can may neither be supported by the stator housing at an axial end facing the impeller nor at an axial end facing away from the impeller, nor somewhere between those ends. So, optionally, the second coupling may be releasable without releasing the first coupling.

According to the present invention, the rotor can has a first axial end facing the impeller and a second axial end facing away from the impeller, wherein the first axial end is open and the second axial end is closed. The rotor can may be essentially pot-shaped. The rotor can may be shaped by rolling, expanding, cutting, milling and/or punching of a single integral metal piece. Alternatively or in addition, the rotor can may be composed of two or more pieces by welding, crimping or other joining methods.

According to the present invention, the rotor comprises a rotor can flange at the first axial end facing the impeller, wherein the first coupling is provided by a securing member being located around the rotor can and securing the rotor can flange against the pump housing. The securing member is a union nut with an opening through which the rotor can protrudes. Preferably, the securing member secures the rotor can flange against the pump housing in axial direction only. Radially, the rotor can flange may optionally comprise a lateral rotor can flange face fitting within a peripheral wall of the pump housing. The lateral rotor can flange face may comprise an axially tapering section with a smaller diameter at the end facing the impeller than at the end facing away from the impeller to facilitate the insertion of the rotor can. Preferably, the tapering section is located at radial projections of the lateral rotor can flange face.

Optionally, a sealing ring is pressed by the securing member both axially against the rotor can flange and radially outward against the peripheral wall of the pump housing. Optionally, the securing member may have a conical annular surface for pressing the sealing ring both axially against the rotor can flange and radially outward against the peripheral wall of the pump housing. The peripheral wall of the pump housing may be formed as the radially inner wall of an annular projection projecting axially out of the pump housing. The annular projection may comprise a circumferential outer thread for engaging with a corresponding inner thread of the securing member. The conical annular surface and the inner thread of the securing member may form an annular gap into which the annular projection of the pump housing extends when the securing member is screwed onto the pump housing. No additional fasteners are needed in this embodiment. In a non-claimed alternative, the securing member may be a bracket that is secured by fasteners to the pump housing. Preferably, the rotor can may be water-tightly coupled to the pump housing.

Optionally, a bearing carrier may be placed axially between the rotor can and the impeller, wherein the bearing carrier comprises a bearing carrier flange having a lateral bearing carrier flange face fitting within a peripheral wall of the pump housing, wherein the bearing carrier flange is axially placed between the rotor can flange and an axial annular surface of the pump housing. The lateral bearing carrier flange face may comprise an axially tapering section with a smaller diameter at the end facing the impeller than at the end facing away from the impeller, preferably at radial projections, to facilitate the insertion of the bearing carrier.

Optionally, the second axial end of the rotor can may comprise an at least partially convexly shaped axial end face. For instance, the axial end face may be spherical, ellipsoidal, paraboloidal, cone-shaped or flat with a rounded circumferential edge or chamfer face. Preferably, the axial end of the rotor can facing away from the impeller may be edge-less. This has the advantage of a smoother fluid flow within the rotor can to reduce mechanical resistance caused by turbulences. Furthermore, the at least partially convexly shaped second axial end of the rotor can is mechanically more resistant against pressure shocks (so-called water hammer), which can be as high as 16 bar or more.

Optionally, the at least partially convexly shaped axial end face may comprise at least partially a circular curvature in axial direction. For instance, the at least partially convexly shaped axial end face may comprise a flat top face and a rounded edge having a cross-sectional shape of a circle quadrant, said rounded edge connecting the flat top face with a lateral wall of the rotor can.

Optionally, the lateral rotor can flange face may have at least three radial projections abutting against the peripheral wall of the pump housing and centring the rotor can with respect to the peripheral wall of the pump housing. This is in particular beneficial for achieving a snuggly radial fit while allowing for manufacturing tolerances. The radial projections may define the tapering sections to facilitate the insertion of the rotor can into the opening defined by the peripheral wall of the pump housing.

Optionally, the lateral flange face of the bearing carrier flange may have at least three radial projections abutting against the peripheral wall of the pump housing and centring the bearing carrier with respect to the peripheral wall of the pump housing. These radial projections may define the tapering sections to facilitate the insertion of the bearing carrier into the opening defined by the peripheral wall of the pump housing.

Optionally, the pump housing may comprise a circumferential groove in an axial annular surface adjacent to the peripheral wall of the pump housing to accommodate material that is scraped off during insertion of the rotor can and/or the bearing carrier.

Optionally, the first coupling may comprise an interface for the second coupling. In particular, the securing member may define both the radially more inward first coupling and the second radially more outward coupling.

In a non-claimed alternative, the first coupling may comprise a fastener in a thread connection with the pump housing. This may be an alternative to the securing member being a union nut. For instance, the securing member may be bracket that is fastened to the pump housing by fasteners in a thread connection.

### SUMMARY OF THE DRAWINGS

Embodiments of the present disclosure will now be described by way of example with reference to the following figures of which:
Fig. 1 shows a perspective view on an example of a pump assembly disclosed herein;
Fig. 2 shows a top view on an example of a pump assembly disclosed herein;
Fig. 3 shows cut view along cut A-A as outlined in Fig. 2 on an example of a pump assembly disclosed herein;
Fig. 4 shows an exploded view on an example of a pump assembly disclosed herein;
Fig. 5 shows a detailed cut view of detail B as outlined in Fig. 3;
Fig. 6 shows a detailed cut view of detail C as outlined in Fig. 3;
Fig. 7 shows a top view on a pump housing and a rotor can of an example of a pump assembly disclosed herein;
Fig. 8 shows a detailed top view of detail D as outlined in Fig. 7; and
Fig. 9 shows a more detailed top view of detail E as outlined in Fig. 8.

### DETAILED DESCRIPTION

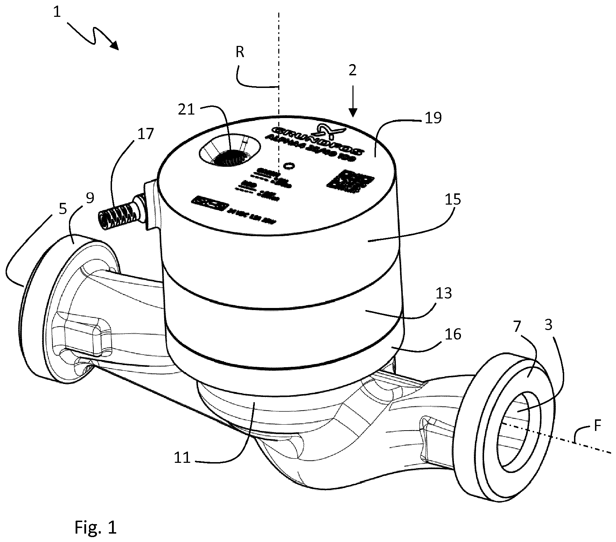

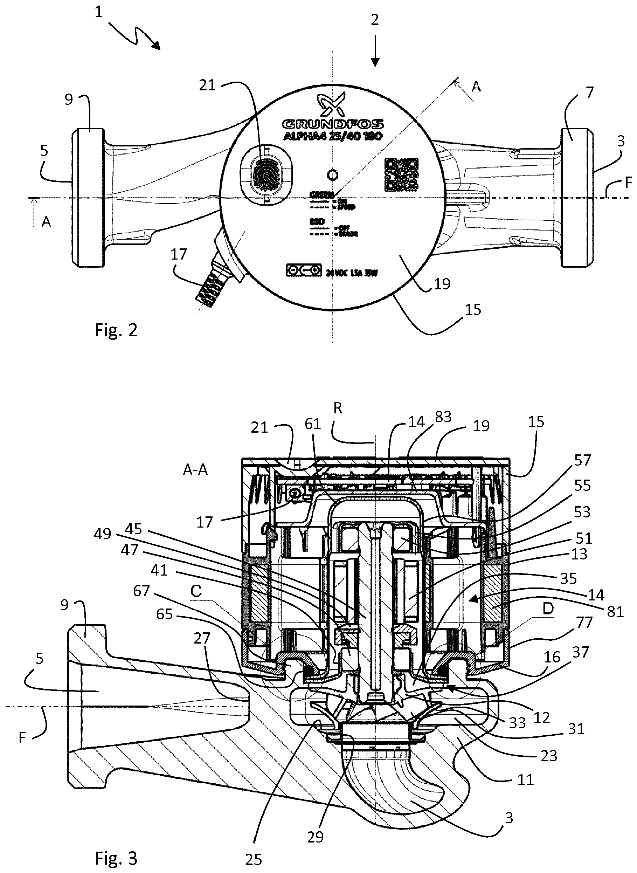

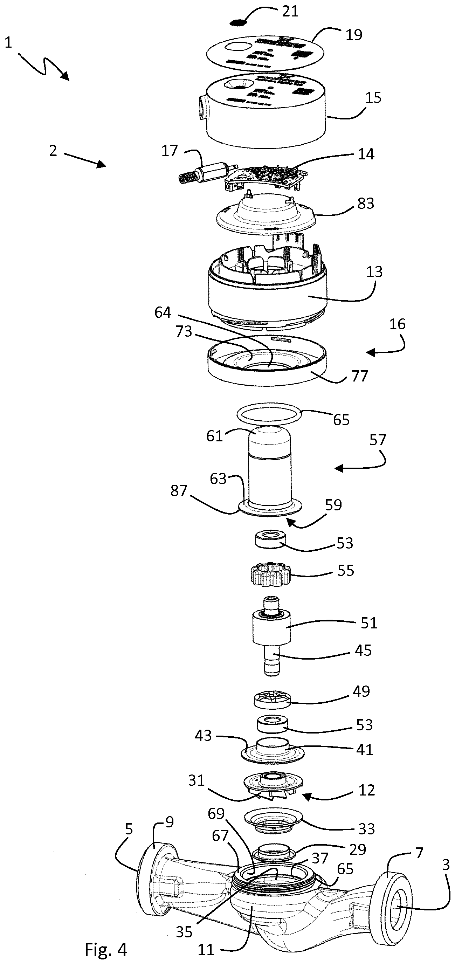

Fig. 1 shows a pump assembly 1 with a centrifugal pump unit 2, an input port 3 and an output port 5, wherein the input port 3 and the output port 5 are coaxially arranged along a pipe axis F on opposing sides of the pump unit 2. The input port 3 and the output port 5 comprise connector flanges 7, 9 for a connection to pipes (not shown). The pump unit 2 comprises a rotor axis R essentially perpendicular to the pipe axis F. A pump housing 11 of the pump unit 2 is arranged between the input port 3 and the output port 5. The pump housing 11 comprises an impeller 12 (see Figs. 3 and 4) for rotating counter-clockwise around the rotor axis R and pumping fluid from the input port 3 to the output port 5. The impeller 12 is driven counter-clockwise by a three-phase synchronous permanent magnet drive motor having a stator 14 located in a stator housing 13 extending from the pump housing 11 along the rotor axis R to an electronics housing 15. The electronics housing 15 has an essentially cylindrical shape like the stator housing 13 and has essentially the same diameter. The stator housing 13 and the electronics housing 15 are essentially coaxially stacked on top of each other along the rotor axis R. The stator housing 13 is mounted to the pump housing 11 by means of a securing member 16 in form of a union nut having essentially the same outer diameter like the stator housing 13 and the electronics housing 15.

The electronics housing 15 comprises motor control electronics on a printed circuit board (PCB) 14 (see Fig. 3 and 4) for controlling the motor. The motor and the motor electronics are power supplied via a low DC voltage connector 17. The pump assembly 1 may comprise an external power supply module (not shown) for connection to the pump unit 2 via the low DC voltage connector 17. The external power supply module may, for instance, transform an AC line voltage of 110-240V to a low DC voltage of 12-60V. The external power supply may comprise a line filter against electromagnetic interference (EMI) and a voltage converter, which thus do not need to be located on the motor electronics PCB 14. Thus, the motor electronics PCB 14 and the electronics housing 15 may have a more compact design. A top face 19 of the electronics housing 15 may comprise a user interface, such as a button 21, a light-emitting diode (LED) and/or a display (not shown). The button 21 may for instance be an on/off-button. One or more LEDs and/or a display may signal an operating parameter or status, e.g. for indicating a normal operation, a failure mode, a motor speed, a successful/unsuccessful wireless connection, a power consumption, a flow, a head and/or a pressure.

The top view of Fig. 2 shows how the cut A-A shown in Fig. 3 extends through the pump unit 2. The cut view of Fig. 3 displays the very compact pump design achieved by this disclosure. Where Fig. 3 may be too crowded to see a feature clearly, the exploded view of Fig. 4 may be referred to. The inlet port 3 curls from the pipe axis F in a fluid-mechanically efficient way to end coaxially with the rotor axis R from below into an impeller chamber 23 of the pump housing 11. The impeller chamber 23 has a concentric bottom entry 25 in fluidic connection with the inlet port 3 and a tangential exit 27 in fluidic connection with the outlet port 5. A deflector plate 29 is located concentrically with the rotor axis R at the bottom entry 25 of the impeller chamber 23 to prevent a back-flow of fluid into the inlet port 3. The impeller 12 is placed concentrically above the deflector plate 29. The impeller 12 comprises inner spiral vanes 31 and at its bottom side an impeller plate 33 for forming fluid-mechanically efficient impeller channels for accelerating fluid radially outward and tangentially in counter-clockwise direction by a centrifugal force when the impeller 12 rotates. Such a radially outward and tangentially flow creates a central suction of fluid from the inlet port 3 and a pressure at the outlet port 5.

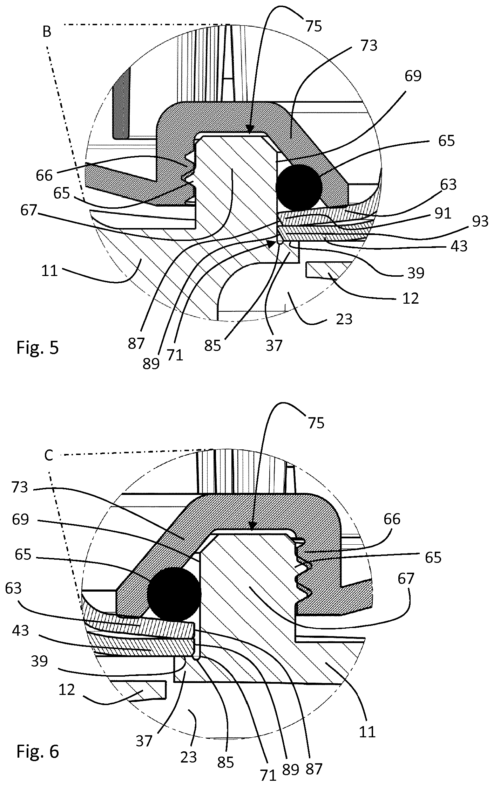

The pump housing 11 has an upper circular opening 35 (see. Fig. 4) through which the impeller 12 can be placed into the impeller chamber 23 during manufacturing of the pump unit 2. In order to achieve a most compact pump design, the circular opening 35 may have a just slightly larger diameter than the impeller 12. The rim of the circular opening 35 may be formed by a radially inward projection 37 (better visible in detailed views of Fig. 5 and 6). The radially inward projection 37 forms an axial annular surface 39 on which a bearing carrier 41 resides with a bearing carrier flange 43. A rotor axle 45 extends along the rotor axis R through the bearing carrier 41 and is rotationally fixed with a lower end portion to the impeller 12. The bearing carrier 41 centres a first radial bearing ring 47 being in sliding contact with the rotor axle 45. The rotor axle 45 and the first radial bearing ring 47 may comprise carbon and low friction radial contact surfaces. A very thin lubricating film of the pumped fluid in the range of microns may establish between the rotor axle 45 and the first radial bearing ring 47 when the rotor axle 45 rotates relative to the fixed first radial bearing ring 47. An axial bearing plate 49 is placed on top of the first radial bearing ring 47 to provide a low friction annular top surface. The low friction annular top surface of the axial bearing plate 49 may be wavy or comprise radial channels for fluid flow (better visible in Fig. 4) for establishing a thin lubricating film of the pumped fluid and reducing friction. A permanent magnet rotor 51 embraces the rotor axle 45 and is rotationally fixed to it. A bottom annular surface of the permanent magnet rotor 51 slides during rotation on the fixed low friction annular top surface of the axial bearing plate 49. A second radial bearing ring 53 is in low-friction sliding contact with an upper end of the rotor axle 45. The second radial bearing ring 47 is centred by a bearing bushing 55 with radial extensions and axial channels for allowing an axial fluid flow (better visible in Fig. 4). As the impeller 12 sucks itself and the rotor axle 45 plus the permanent magnet rotor 51 downwards during rotation, only one axial bearing plate 49 is necessary.

The deflector plate 29, the impeller 12, the rotor axle 45, the first radial bearing ring 47, the axial bearing plate 49, the permanent magnet rotor 51, the second radial bearing ring 53 and the bearing bushing 55 are so-called "wet parts" which are all immersed in the fluid to be pumped. The rotating ones of the wet parts, i.e. the impeller 12, the rotor axle 45 and the permanent magnet rotor 51 are so-called "wet-running" using the fluid to be pumped for providing lubricant films for reducing friction at two radial surfaces and one axial contact surface. The fluid to be pumped is preferably water.

The wet parts are enclosed by a pot-shaped rotor can 57 such that fluid can flow between the impeller chamber 23 and the inner volume of the rotor can 57. The rotor can 57 comprises a lower first axial end 59, i.e. the axial end facing the impeller 12, and an upper second axial end 61, i.e. the axial end facing away from the impeller 12 (see Fig. 4). The first axial end 59 is open and defines a rotor can flange 63. The second axial end 61 is closed. The securing member 16 comprises a central opening 64 through which the rotor can 57 protrudes such that the securing member 16 embraces the rotor can 57 and secures the rotor can flange 63 towards the axial annular surface 39 of the radially inward projection 37 at the rim of the upper circular opening 35 of the pump housing 11. The bearing carrier flange 43 is placed between the rotor can flange 63 and the axial annular surface 39 of the radially inward projection 37 of the pump housing 11. Thus, the securing member 16 secures both the rotor can 57 and the bearing carrier 41 via a first coupling. The first coupling is water-tight, because a sealing ring 65 is pressed by the securing member 16 against an upper annular surface of the rotor can flange 63.

The securing member 16 i according to the invention is a union nut with an inner thread 66 being screwed on a corresponding outer thread of 65 of an annular projection 67 of the pump housing 11. The annular projection 67 projects axially from the pump housing 11 with a larger diameter than the circular opening 35 and the radially inward projection 37. The annular projection 67 defines the outer thread 65 at its lateral outer side and a peripheral wall 69 at its inner side. The peripheral wall 69 and the axial annular surface 39 of the radially inward projection 37 may form an inner circular edge 71.

The securing member 16 further comprises a conical annular surface 73 forming an annular gap 75 between the conical annular surface 73 and the inner thread 66. The annular projection 67 of the pump housing 11 fits into the annular gap 75 when the securing member 16 is screwed onto the annular projection 67 of the pump housing 11. The conical annular surface 73 urges the sealing ring 65 both axially downward against an upper annular surface of the rotor can flange 63 and radially outward against the peripheral wall 69 of the pump housing 11. Thereby, the wet parts are water-tightly sealed by the one sealing ring 65. This water-tight first coupling of the rotor can 57 to the pump housing 11 by means of the securing member 16 is independent of the mounting of the stator housing 13 or the electronics housing 13. The stator housing 13 and/or the electronics housing 13 can be unmounted without opening the water-tight first coupling between the rotor can 57 and the pump housing 11. In a non-claimed alternative (not shown), instead of the inner thread 66 of the securing member 16 as a union nut, the securing member 16 may be a bracket being fastened by axial fasteners in a thread connection with the pump housing 11.

The securing member 16 extends further radially outward defining a lateral side wall 77 having essentially the same diameter as the stator housing 13 and the electronics housing 15. The lateral side wall 77 forms part of a second coupling between the securing member 16 and stator housing 13, wherein the second coupling between the securing member 16 and stator housing 13 is located radially more outward than the first coupling between the securing member 16 and the rotor can 57. In other words, the securing member 16 provides a radially more inward first coupling of the rotor can 57 to the pump housing 11 and a radially more outward second coupling of the stator housing 13 to the pump housing 11. The securing member 16 may thus provide an interface of the first coupling to the second coupling. The second coupling may be a thread connection or a bayonet coupling between the lateral side wall 77 and the stator housing 13. In order to fix the stator housing 13 rotationally, it is preferred that the second coupling closes in clockwise direction, because the driving of the rotor 51 in counter-clockwise direction provokes a counter-torque on the stator 14 in clockwise direction, which preferably closes the second coupling rather than opening it.

The stator housing 13 encloses a stator 14 with six coils of copper wire windings (not shown) around a ferromagnetic core 81 in a star-shaped arrangement of a speed-controlled three-phase synchronous 4-pole permanent magnet AC motor. The stator 14 is axially aligned with the permanent magnet rotor 51 for providing a most efficient magnetic flux for driving the permanent magnet rotor 51. The stator housing 13 may be closed on top by a stator housing lid 83 through which electronic contacts of the stator 14 are fed. The electronics housing 15 may be clicked axially onto the stator housing 13 and fixed by a latch connection. The PCB 14 with the motor electronics may extend perpendicular to the rotor axis R parallel to the top face 19 and in close proximity to it allowing a compact design. The PCB 14 is connected with the electronic contacts of the stator 14 fed through the stator housing lid 83. The proximity of the PCB 14 to the top face 19 of the electronics housing 15 allows for a simple design of user interfaces like the button 21, LEDs and/or a display. The user interfaces may be located on the PCB 14 with the top face 19 merely providing windows, holes or mechanical button parts.

It is important to note that the second axial end 61 of the rotor can 57 is not mechanically centred, suspended or supported by the stator housing 13. The rotor can 57 is only fixed at its rotor can flange 63 at its open first axial end 59. It is thus preferred that the rotor can 57 has a stable and rigid design to hold against axial and radial forces during operation of the pump unit 2. One feature stabilising the rotor can 57 is the closed second axial end 61 being at least partially convexly shaped. In the embodiment shown in Fig. 3, the edge between a flat top face and the lateral wall of the rotor can 57 is rounded in form of a quarter-circle. In other embodiments (not shown), the second axial end 61 may be spherical, elliptical, ellipsoidal or otherwise cone-shaped. This has an advantage of a smoother fluid flow within the rotor can 57 to reduce mechanical resistance caused by turbulences. Furthermore, the at least partially convexly shaped second axial end 61 of the rotor can is mechanically more resistant against pressure shocks (so-called water hammer), which can be as high as 16 bar.

The detail B shown in Fig. 5 gives a better view on the first coupling between the rotor can 57 and the pump housing 11. The securing member 16 is a union nut with the inner thread 66 being screwed on the corresponding outer thread of 65 of the annular projection 67 of the pump housing 11. The annular projection 67 defines the outer thread 65 at its lateral outer side and the peripheral wall 69 at its inner side. The peripheral wall 69 and the axial annular surface 39 of the radially inward projection 37 meet at an inner circular edge 71, where a small circumferential groove 85 is located in the axial annular surface 39 adjacent to the peripheral wall 69. The securing member 16 forms the annular gap 75 between the conical annular surface 73 and the inner thread 66. The annular projection 67 of the pump housing 11 fits into the annular gap 75 when the securing member 16 is (as shown) screwed onto the annular projection 67 of the pump housing 11. The conical annular surface 73 urges the sealing ring 65 both axially downward against an upper annular surface of the rotor can flange 63 and radially outward against the peripheral wall 69 of the pump housing 11. The bearing carrier flange 43 is placed between the rotor can flange 63 and the axial annular surface 39 of the radially inward projection 37 in a sandwich configuration. The sealing ring 65 seals both against leakage between the securing member 16 and the rotor can 57 into the stator housing 13, and against leakage between the securing member 16 and pump housing 11 out of the pump unit 2. The conical annular surface 73 may thus have essentially a 45° inclination to urge the sealing ring 65 as much downwards against the rotor can flange 63 as radially outward against the peripheral wall 69.

The rotor can flange 63 has a lateral rotor can flange face 87, and the bearing carrier flange 43 has a lateral bearing carrier flange face 89. Both the lateral rotor can flange face 87 and the lateral bearing carrier flange face 89 may snuggly fit within the peripheral wall 69 of the pump housing 11. Both the rotor can 57 and the bearing carrier 41 are centred by at least three lateral contact points with the peripheral wall 69. Fig. 4 shows one of those contact points. Both the lateral rotor can flange face 87 and the lateral bearing carrier flange face 89 are tapered with a slightly smaller diameter at the bottom end compared to the upper end. This facilitates the insertion of the bearing carrier flange 43 and the rotor can flange 63 into the circular opening defined by the peripheral wall 69. The small circumferential groove 85 located in the axial annular surface 39 adjacent to the peripheral wall 69 is advantageous to accommodate scraped-off material during insertion of the bearing carrier flange 43 and the rotor can flange 63 into the circular opening defined by the peripheral wall 69.

The detail C shown in Fig. 6 is a 135°-rotated cut view with respect to the detail B shown in Fig. 5. In the detail C shown in Fig. 6, the lateral rotor can flange face 87 and the lateral bearing carrier flange face 89 do not contact the peripheral wall 69. This allows for manufacturing tolerances and thus facilitates in an industrialised machine process the snuggly insertion of the bearing carrier flange 43 and the rotor can flange 63 into the circular opening defined by the peripheral wall 69.

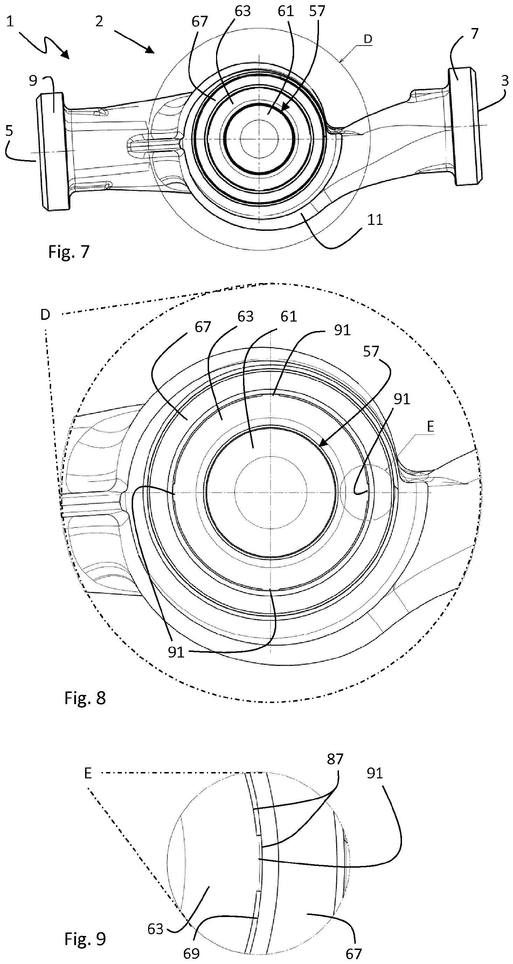

It becomes clear in Figs. 7 to 9 that the lateral rotor can flange face 87 has at least three, here four, radial projections 91 abutting against the peripheral wall 69 and centring the rotor can 57. The four radial projections 91 are circumferentially equally distributed with a 90° angular neighbouring distance. Similarly, the lateral bearing carrier flange face 89 has at least three, here four, radial projections 93 abutting against the peripheral wall 69 and centring the bearing carrier 41. So, detail B of Fig. 4 shows a cut through a radial projection 91 of the lateral rotor can flange face 87 and the radial projection 93 of the lateral bearing carrier flange face 89, whereas detail C of Fig. 5 shows a cut at an angle where there is no radial projection 91, 93 abutting against the peripheral wall 69.

It will be appreciated by the reader that integers or features of the disclosure that are described as optional, preferable, advantageous, convenient or the like are optional.

The above embodiments are to be understood as illustrative examples of the invention, which is defined by the appended claims.

## Claims

1. A pump assembly (1) comprising
- an impeller (12) with a rotor axis (R),
- a pump housing (11) accommodating the impeller (12),
- a drive motor with a stator (14) and a rotor (51) for driving the impeller (12),
- a rotor can (57) accommodating the rotor (51), and
- a stator housing (13) accommodating the stator (14),
wherein the rotor can (57) is mounted by a first coupling to the pump housing (11),
wherein the stator housing (13) is mounted by a second coupling to the pump housing (11),
wherein the first coupling is located closer to the rotor axis (R) than the second coupling, wherein
the rotor can (57) has a first axial end (59) facing the impeller (12) and a second axial end (61) facing away from the impeller (61), wherein the first axial end (59) is open and the second axial end (61) is closed,
wherein the rotor can (57) comprises a rotor can flange (63) at the first axial end (59), and wherein the first coupling is provided by a securing member (16) being located around the rotor can (57) and securing the rotor can flange (63) against the pump housing (11), **characterized in that** the securing member (16) is a union nut with an opening (64) through which the rotor can (57) protrudes.

2. The pump assembly (1) according to claim 1, wherein the second coupling is releasable without releasing the first coupling.

3. The pump assembly (1) according to any of the preceding claims, wherein the rotor can flange (63) has a lateral rotor can flange face (87) fitting within a peripheral wall (69) of the pump housing (11), wherein a sealing ring (65) is pressed by the securing member (16) both axially against the rotor can flange (63) and radially outward against the peripheral wall (69) of the pump housing (11).

4. The pump assembly (1) according to claim 3, wherein the lateral rotor can flange face (87) comprises an axially tapered section with a smaller diameter at the end facing the impeller (12) than at the end facing away from the impeller (12).

5. The pump assembly (1) according to claim 3 or 4, wherein the securing member (16) has a conical annular surface (73) for pressing the sealing ring (65) both axially against of the rotor can flange (63) and radially outward against the peripheral wall (69) of the pump housing (11).

6. The pump assembly (1) according to any of the preceding claims, wherein the rotor can (57) is water-tightly coupled to the pump housing (11).

7. The pump assembly (1) according to any of the preceding claims, comprising a bearing carrier (41) placed axially between the rotor can (57) and the impeller (12), wherein the bearing carrier (41) comprises a bearing carrier flange (43) having a lateral bearing carrier flange face (89) fitting within a peripheral wall (69) of the pump housing (11), wherein the bearing carrier flange (43) is axially placed between the rotor can flange (63) and an axial annular surface (39) of the pump housing (11).

8. The pump assembly (1) according to claim 7, wherein the lateral bearing carrier flange face (89) comprises an axially tapered section with a smaller diameter at the end facing the impeller (12) than at the end facing away from the impeller (12).

9. The pump assembly (1) according to any of the preceding claims, wherein the second axial end (61) of the rotor can (57) comprises an at least partially convexly shaped axial end face.

10. The pump assembly (1) according to claim 9, wherein the at least partially convexly shaped axial end face comprises at least partially a circular curvature in axial direction.

11. The pump assembly (1) according to any of the claims 3 to 10, wherein the lateral rotor can flange face (87) has at least three radial projections (91) abutting against the peripheral wall (69) of the pump housing (11) and centring the rotor can (57) with respect to the peripheral wall (69) of the pump housing (11).

12. The pump assembly (1) according to any of the claims 7 to 11, wherein the lateral bearing carrier flange face (89) has at least three radial projections (93) abutting against the peripheral wall (69) of the pump housing (11) and centring the bearing carrier (41) with respect to the peripheral wall (69) of the pump housing (11).

13. The pump assembly (1) according to any of the claims 3 to 12, wherein the pump housing (11) comprises a circumferential groove (85) in an axial annular surface (39) of the pump housing (11) adjacent to the peripheral wall (69) of the pump housing (11).

14. The pump assembly (1) according to any of the claims, wherein the first coupling comprises an interface for the second coupling.

## Patentansprüche

1. Pumpenanordnung (1), umfassend
- ein Laufrad (12) mit einer Rotorachse (R),
- ein Pumpengehäuse (11), das das Laufrad (12) beherbergt,
- einen Antriebsmotor mit einem Stator (14) und einen Rotor (51) zum Antreiben des Laufrads (12),
- eine Rotorbuchse (57), die den Rotor (51) beherbergt, und
- ein Statorgehäuse (13), das den Stator (14) beherbergt,
wobei die Rotorbuchse (57) mittels einer ersten Verbindung an das Pumpengehäuse (11) montiert ist,
wobei das Statorgehäuse (13) mittels einer zweiten Verbindung an das Pumpengehäuse (11) montiert ist,
wobei die erste Verbindung sich näher an der Rotorachse (R) als die zweite Verbindung befindet, wobei die Rotorbuchse (57) ein erstes axiales Ende (59), das zum Laufrad (12) zeigt, und ein zweites axiales Ende (61), das von dem Laufrad (61) weg zeigt, aufweist, wobei das erste axiale Ende (59) offen ist und das zweite axiale Ende (61) geschlossen ist,
wobei die Rotorbuchse (57) einen Rotorbuchsenrand (63) am ersten axialen Ende (59) umfasst, und wobei die erste Verbindung durch ein Befestigungsglied (16), das sich um die Rotorbuchse (57) herum befindet und den Rotorbuchsenrand (63) an dem Pumpengehäuse (11) befestigt, vorgesehen ist,
**dadurch gekennzeichnet, dass** das Befestigungsglied (16) eine Überwurfmutter mit einer Öffnung (64) ist, durch welche die Rotorbuchse (57) hervorragt.

2. Pumpenanordnung (1) nach Anspruch 1, wobei die zweite Verbindung lösbar ist, ohne die erste Verbindung zu lösen.

3. Pumpenanordnung (1) nach einem der vorhergehenden Ansprüche, wobei der Rotorbuchsenrand (63) eine laterale Seite (87) des Rotorbuchsenrands aufweist, die in eine Umfangswand (69) des Pumpengehäuses (11) passt, wobei ein Dichtungsring (65) durch das Befestigungsglied (16) sowohl axial gegen den Rotorbuchsenrand (63) als auch radial nach außen gegen die Umfangswand (69) des Pumpengehäuses (11) gedrückt wird.

4. Pumpenanordnung (1) nach Anspruch 3, wobei die laterale Seite (87) des Rotorbuchsenrands einen axial verjüngten Abschnitt mit einem kleineren Durchmesser am zu dem Laufrad (12) zeigenden Ende als am von dem Laufrad (12) weg zeigenden Ende umfasst

5. Pumpenanordnung (1) nach Anspruch 3 oder 4, wobei das Befestigungsglied (16) eine kegelförmige Ringfläche (73) aufweist, um den Dichtungsring (65) sowohl axial gegen den Rotorbuchsenrand (63) als auch radial nach außen gegen die Umfangswand (69) des Pumpengehäuses (11) zu drücken.

6. Pumpenanordnung (1) nach einem der vorhergehenden Ansprüche, wobei die Rotorbuchse (57) wasserdicht mit dem Pumpengehäuse (11) verbunden ist.

7. Pumpenanordnung (1) nach einem der vorhergehenden Ansprüche, umfassend einen Lagerträger (41), der axial zwischen der Rotorbuchse (57) und dem Laufrad (12) platziert ist, wobei der Lagerträger (41) einen Lagertrögerrand (43) umfasst, der eine laterale Seite (89) des Lagerträgerrands aufweist, die in eine Umfangswand (69) des Pumpengehäuses (11) passt, wobei der Lagerträgerrand (43) axial zwischen dem Rotorbuchsenrand (63) und einer axialen Ringfläche (39) des Pumpengehäuses (11) platziert ist.

8. Pumpenanordnung (1) nach Anspruch 7, wobei die laterale Seite (89) des Lagerträgerrands einen axial verjüngten Abschnitt mit einem kleineren Durchmesser am zu dem Laufrad (12) zeigenden Ende als am von dem Laufrad (12) weg zeigenden Ende umfasst.

9. Pumpenanordnung (1) nach einem der vorhergehenden Ansprüche, wobei das zweite axiale Ende (61) der Rotorbuchse (57) eine mindestens teilweise konvex geformte axiale Endseite umfasst.

10. Pumpenanordnung (1) nach Anspruch 9, wobei die mindestens teilweise konvex geformte axiale Endseite mindestens teilweise eine kreisförmige Biegung in axialer Richtung umfasst.

11. Pumpenanordnung (1) nach einem der Ansprüche 3 bis 10, wobei die laterale Seite (87) des Rotorbuchsenrands mindestens drei radiale Vorsprünge (91) aufweist, die gegen die Umfangswand (69) des Pumpengehäuses (11) anstoßen und die Rotorbuchse (57) in Bezug auf die Umfangswand (69) des Pumpengehäuses (11) zentrieren.

12. Pumpenanordnung (1) nach einem der Ansprüche 7 bis 11, wobei die laterale Seite (89) des Lagerträgerrands mindestens drei radiale Vorsprünge (93) aufweist, die gegen die Umfangswand (69) des Pumpengehäuses (11) anstoßen und den Lagerträger (41) in Bezug auf die Umfangswand (69) des Pumpengehäuses (11) zentrieren.

13. Pumpenanordnung (1) nach einem der Ansprüche 3 bis 12, wobei das Pumpengehäuse (11) eine Umfangsnut (85) in einer axialen Ringfläche (39) des Pumpengehäuses (11) neben der Umfangswand (69) des Pumpengehäuses (11) umfasst.

14. Pumpenanordnung (1) nach einem der Ansprüche, wobei die erste Verbindung eine Schnittstelle für die zweite Verbindung umfasst.

## Revendications

1. Ensemble de pompe (1) comprenant
- une roue-hélice (12) ayant un axe de rotor (R),
- un carter de pompe (11) recevant la roue-hélice (12),
- un moteur d'entraînement ayant un stator (14) et un rotor (51) pour entraîner la roue-hélice (12),
- une enveloppe de rotor (57) recevant le rotor (51), et
- un logement de stator (13) recevant le stator (14),
dans lequel l'enveloppe de rotor (57) est montée par un premier couplage au carter de pompe (11),
dans lequel le logement de stator (13) est monté par un second couplage au le carter de pompe (11),
dans lequel le premier couplage est situé plus près de l'axe de rotor (R) que le second couplage,
dans lequel l'enveloppe de rotor (57) a une première extrémité axiale (59) faisant face à la roue-hélice (12) et une seconde extrémité axiale (61) à l'opposé de la roue-hélice (61), dans lequel la première extrémité axiale (59) est ouverte et la seconde l'extrémité axiale (61) est fermée,
dans lequel l'enveloppe de rotor (57) comprend une bride d'enveloppe de rotor (63) au niveau de la première extrémité axiale (59), et dans lequel le premier couplage est fourni par un élément de fixation (16) situé autour de l'enveloppe de rotor (57) et fixant la bride d'enveloppe de rotor (63) contre le carter de pompe (11),
**caractérisé en ce que**
l'élément de fixation (16) est un écrou-raccord présentant une ouverture (64) à travers laquelle l'enveloppe de rotor (57) fait saillie.

2. Ensemble de pompe (1) selon la revendication 1, dans lequel le second couplage peut être libéré sans libérer le premier couplage.

3. Ensemble de pompe (1) selon l'une des revendications précédentes, dans lequel la bride d'enveloppe de rotor (63) possède une face latérale de bride d'enveloppe de rotor (87) s'ajustant dans une paroi périphérique (69) du carter de pompe (11), dans lequel une bague d'étanchéité (65) est comprimée par l'élément de fixation (16) à la fois axialement contre la bride d'enveloppe de rotor (63) et radialement vers l'extérieur contre la paroi périphérique (69) du carter de pompe (11).

4. Ensemble de pompe (1) selon la revendication 3, dans lequel la face latérale de bride d'enveloppe de rotor (87) comprend une section axialement biseautée avec un diamètre plus petit au niveau de l'extrémité faisant face à la roue-hélice (12) qu'au niveau de l'extrémité à l'opposé à la roue-hélice (12).

5. Ensemble de pompe (1) selon la revendication 3 ou 4, dans lequel l'élément de fixation (16) a une surface annulaire conique (73) pour comprimer la bague d'étanchéité (65) à la fois axialement contre la bride d'enveloppe de rotor (63) et radialement vers l'extérieur contre la paroi périphérique (69) du carter de pompe (11).

6. Ensemble de pompe (1) selon l'une des revendications précédentes, dans lequel l'enveloppe de rotor (57) est couplée au carter de pompe (11) de manière étanche à l'eau.

7. Ensemble de pompe (1) selon l'une des revendications précédentes, comprenant un support de palier (41) placé axialement entre l'enveloppe de rotor (57) et la roue-hélice (12), dans lequel le support de palier (41) comprend une bride de support de palier (43) ayant une face latérale de bride de support de palier (89) s'ajustant dans une paroi périphérique (69) du carter de pompe (11), dans lequel la bride de support de palier (43) est placée axialement entre la bride d'enveloppe de rotor (63) et une surface annulaire axiale (39) du carter de pompe (11).

8. Ensemble de pompe (1) selon la revendication 7, dans lequel la face latérale de bride de support de palier (89) comprend une section axialement biseautée avec un diamètre plus petit au niveau de l'extrémité faisant face à la roue-hélice (12) qu'au niveau de l'extrémité à l'opposé à la roue-hélice (12).

9. Ensemble de pompe (1) selon l'une des revendications précédentes, dans lequel la seconde extrémité axiale (61) de l'enveloppe de rotor (57) comprend une face d'extrémité axiale de forme au moins partiellement convexe.

10. Ensemble de pompe (1) selon la revendication 9, dans lequel la face d'extrémité axiale de forme au moins partiellement convexe comprend au moins partiellement une courbure circulaire dans la direction axiale.

11. Ensemble de pompe (1) selon l'une quelconque des revendications 3 à 10, dans lequel la face latérale de bride d'enveloppe de rotor (87) présente au moins trois saillies radiales (91) venant en butée contre la paroi périphérique (69) du carter de pompe (11) et centrant le logement de rotor (57) par rapport à la paroi périphérique (69) du carter de pompe (11).

12. Ensemble de pompe (1) selon l'une quelconque des revendications 7 à 11, dans lequel la face latérale de bride de support de palier (89) présente au moins trois saillies radiales (93) venant en butée contre la paroi périphérique (69) du carter de pompe (11) et centrant le support de palier (41) par rapport à la paroi périphérique (69) du carter de pompe (11).

13. Ensemble de pompe (1) selon l'une des revendications 3 à 12, dans lequel le carter de pompe (11) comprend une rainure circonférentielle (85) dans une surface annulaire axiale (39) du carter de pompe (11) adjacente à la paroi périphérique (69) du carter de pompe (11).

14. Ensemble de pompe (1) selon l'une des revendications, dans lequel le premier couplage comprend une interface pour le second couplage.
